# EUROPEAN PATENT SPECIFICATION

(11) **EP 3 956 369 B1**
(45) Date of publication and mention of the grant of the patent: **22.05.2024**
(21) Application number: 20713682.1
(22) Date of filing: 31.03.2020
(51) Int. Cl.: C08F 4/639, C08F 210/02, G01N 31/22, C08F 4/659, C08F 4/6592, C08F 210/06

(54) **SENSOR BASED ON A POLYOLEFIN MATRIX AND A SENSING COMPOUND**
SENSOR BASIEREND AUF EINER POLYOLEFINMATRIX UND EINER SENSORVERBINDUNG
CAPTEUR BASÉ SUR UNE MATRICE DE POLYOLÉFINE ET UN COMPOSÉ DE DÉTECTION

(30) Priority: 16.04.2019 EP 19169379
(43) Date of publication of application: 23.02.2022
(73) Proprietor: SABIC Global Technologies, B.V., 4612 PX Bergen op Zoom (NL)
(72) Inventor: BOUYAHYI, Miloud, 6160 GA Geleen (NL); TÉLLEZ NOGALES, Marc, 6160 GA Geleen (NL); JASINSKA-WALC, Lidia, 6160 GA Geleen (NL); DUCHATEAU, Robbert, 6160 GA Geleen (NL)
(74) Representative: Sabic Intellectual Property Group
(86) International application number: PCT/EP2020/059055
(87) International publication number: WO 2020/212129

(56) References cited:
- EP-A1- 3 034 545
- WO-A1-2004/035635
- WO-A1-2011/051915
- WO-A1-2018/104211
- WO-A2-2006/039462
- BERGBREITER ET AL: "Polyethylene surface chemistry", PROGRESS IN POLYMER SCIENCE, PERGAMON PRESS, OXFORD, GB, vol. 19, no. 3, 1 January 1994 (1994-01-01), pages 529-560, XP025402184, ISSN: 0079-6700, DOI: 10.1016/0079-6700(94)90004-3 [retrieved on 1994-01-01]

## Description

The invention relates to smart packaging containing a sensor comprising a polyolefin matrix and a sensing compound.

Sensors for sensing pH or oxygen are known in the art.

The terms active packaging, intelligent packaging, and smart packaging refer to packaging systems used with foods, pharmaceuticals, and several other types of products. They help extend shelf life, monitor freshness, display information on quality, improve safety, and improve convenience. The terms are closely related. *Active packaging* usually means having active functions beyond the inert passive containment and protection of the products. *Intelligent* and smart packaging usually involve the ability to sense or measure an attribute of the product, the inner atmosphere of the package, or the shipping environment. This information can be communicated to users or can trigger active packaging functions. According to a report from Freedonia, demand for active and intelligent packaging in the U.S. is forecasted to expand 8.0 percent annually to $3.5 billion in 2017, well above total packaging demand growth.

One of the problems of certain smart packaging solutions is leaching of the active component, which in some cases makes them not suitable for direct food contact applications.

To reduce leaching, the polymer used for smart packaging materials have a relative high surface energy, such as PET, which provides good adhesion to the sensor/active component. It would be highly desirable if PE or PP could be used as the packaging base material.

Nature Communications 2018, 9:1123 gives an overview of dye sensors based on polymeric materials. It describes the general problem of leaching of dyes out of hydrophobic polyolefin matrix materials and the instability of sensors based on polyolefin matrix materials produced by either introducing the dye-molecule into the feed mixture of the fabrication process (so-called dye-doping) or by applying the dye after fabrication as a dying step. Whereas the former process is complex and needs optimisation for each polymer/dye combination, the latter method leads often to weakly bonded dye molecules which results in leaching of the polymer. To solve this problem, the authors proposed a plasma dye coating technique to chemically activate the polyolefins, and to chemically bond sensing materials to the polyolefin and preparing stable sensors. This method is, however, still complex and not all sensing compounds can be activated to be incorporated into the polyolefins.

Prog. Polym. Sci. 1994, 19, 529-560 describes the synthesis of surface functionalised polyethylenes by mixing PE with functionalised ethylene oligomers. Optionally, dyes can be attached to the oligomers that can function as sensors. This process is complex as it requires chemically bonding of the active sensor component to an ethylene oligomer and subsequent mixing it with a PE matrix. Furthermore, low molecular weight oligomers typically demix from the high molecular weight matrix, which results in leaching of the active component.

There is a need for versatile sensors that can be readily prepared and have flexibility in application of the type of sensing compound in a polyolefin matrix without leaching of the active sensor component.

The invention relates to a smart packaging comprising a sensor comprising a randomly functionalised polyolefin having functional groups, a sensing compound and optionally a polar solvent, wherein the polyolefin has a crystallinity between 0 and 35 %, as determined with DSC, and wherein the amount of monomeric moieties comprising functional groups is at least 0.1 mol% and less than 5 mol %.

The smart packaging of the present invention is defined in claim 1.

Examples of suitable functional groups are hydroxyl, carboxylic acid, amines and thiol groups, as well as their (partially) deprotonated congeners.

Without wanting to be bound to any theory, the inventors believe that the polyolefin having low crystallinity and density can form a continuous hydrophobic matrix having hydrophilic domains, the latter of which host non-bonded polar sensing compounds. Hence, the polar sensing compound is not chemically bonded but physically entrapped in the hydrophobic polyolefin matrix. Sensing of the sensor is believed to operate by diffusion of volatile components (such as carbon dioxide, oxygen, sulphur dioxide, ammonia) through the hydrophobic matrix, and reacting with the sensing compound (such as for example a pH indicator and/or an redox indicator) in the hydrophilic domains to give a signal like for example a change of colour.

### Detailed description

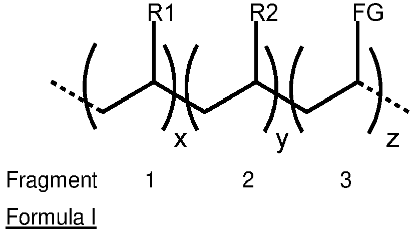

The sensor comprised in the smart packaging according to the invention comprises a randomly functionalised polyolefin according to Formula I (with x > 0, y ≥ 0, z > 0) wherein fragment 1 corresponds to the main monomer of the polymer, fragment 2 corresponds to an optional additional α-olefin and fragment 3 corresponds to the comonomer containing functional groups (FG), preferably protic functional groups such as hydroxyl (-OH), carboxylic acid (-COOH), amine and/or thiol functionalities, a sensing compound and optionally a polar solvent. Preferably, the functional groups are protic functional groups, preferably -OH or -COOH groups. The protic groups can also be partially or fully deprotonated to obtain a partially or fully ionomeric system. Additionally, hydrogen bond enhancing agents can be added to strengthen the inter-polymer interactions within the polar domains.

The polyolefin, according to Formula (I) where y > 0, can be a functionalised linear low-density polyethylene (LLDPE) or a functionalised very low density polyethylene (VLDPE) - together defined as PE for the purpose of the present invention, a functionalised ethylene-propylene rubber (EPR), a functionalised polypropylene (PP) of varying tacticity (Formula (I), y = 0) or a functionalised propylene with an α-olefin copolymer (Formula (I), y > 0), together defined as PP for the purpose of the present invention. The PE, EPR and/or PP are randomly functionalised with functional groups, such as -OH, -COOH, -SH, NHR, NR₂, groups, wherein R is a C₁-C₂₀ hydrocarbyl group, by incorporating monomers having functional groups during synthesis of the PP and PE.

A hydrocarbyl in the sense of the invention may be a substituent containing hydrogen and carbon atoms; it is a linear, branched or cyclic saturated or unsaturated aliphatic substituent, such as alkyl, alkenyl, alkadienyl and alkynyl; alicyclic substituent, such as cycloalkyl, cycloalkadienyl, cycloalkenyl; aromatic substituent, such as monocyclic or polycyclic aromatic substituent, as well as combinations thereof, such as alkyl-substituted aryls and aryl-substituted alkyls. It may be substituted with one or more non-hydrocarbyl, heteroatom-containing substituents. Preferably, R is a C₁-C₂₀ alkyl or a C₆-C₂₀ aryl group, more preferably a C₁-C₁₀ alkyl group.

Preferably, the monomers having functional groups have between 6 and 20 C atoms. Preferably, the monomers having functional groups have at one end (the α-position) an olefinic unsaturation and on the other end (the ω-position) the functional group. The functional group can be protected prior to the copolymerisation, but will preferably be deprotected before making the sensor.

It is possible to copolymerise an α-olefin other than ethylene (in case the polymer is a PE-based polymer) or propylene (in case the polymer is a PP-based polymer) for making a polymer having a reduced density, or a reduced amount of crystallinity in the range of 0 - 35%.

Thus terpolymers, containing either ethylene or propylene as the main monomer and a functional comonomer contain an additional α-olefin comonomer. Examples of α-olefin comonomers are selected from the group consisting of ethylene, propylene, 1-butene, 4-methyl-1-pentene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-cyclopentene, cyclohexene, norbornene, ethylidene-norbornene and vinylidene-norbornene and one or more combinations thereof.

Preferably, it can be advantageous to incorporate ethylene, propylene, 1-butene, 1-hexene, 1-octene to obtain a functionalised PE or PP polymer having at least 3 monomeric moieties (Formula (I), y > 0). The at least 3 monomeric moieties comprise ethylene (for PE) or propylene (for PP), the monomeric moiety having the functional group and the α-olefin, preferably selected from ethylene, propylene, 1-butene, 1-hexene, 1-octene.

In case of functionalised PP, the density and/or crystallinity can also be tuned by altering the tacticity of the polymer.

Functionalised polyolefins are known in the art.

For example, EP 3034545 discloses a process for the preparation of a graft copolymer comprising a polyolefin main chain and one or multiple polymer side chains, the process comprising the steps of:
A) copolymerising at least one first type of olefin monomer and at least one second type of metal-pacified functionalised olefin monomer using a catalyst system to obtain a polyolefin main chain having one or multiple metal-pacified functionalised short chain branches, the catalyst system comprising:
   i) a metal catalyst or metal catalyst precursor comprising a metal from Group 3-10 of the IUPAC Periodic Table of elements;
   ii) optionally a co-catalyst;
B) reacting the polyolefin main chain having one or multiple metal-pacified functionalised short chain branches obtained in step A) with at least one metal substituting agent to obtain a polyolefin main chain having one or multiple functionalised short chain branches;
C) forming one or multiple polymer side chains on the polyolefin main chain, wherein as initiators the functionalised short chain branches on the polyolefin main chain obtained in step B) are used to obtain the graft copolymer.

EP 1186619 discloses inter alia a polar group-containing olefin copolymer comprising a constituent unit represented by the following formula (1), a constituent unit represented by the following formula (2) and a constituent unit represented by the following formula (3), having a molecular weight distribution (*M_{w}*/*Mₙ*) of not more than 3, and having an intensity ratio of Tαβ to Tαα+ Tαβ (Tαβ/ Tαα+ Tαβ)), as determined from a ¹³C-NMR spectrum of said copolymer, of not more than 1.0: 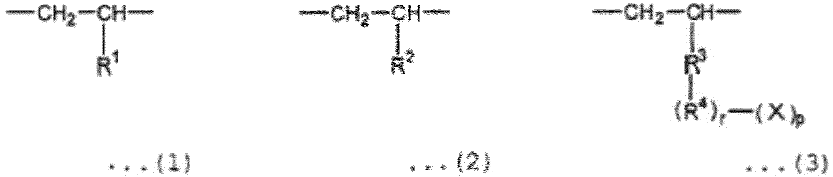 wherein R¹ and R² may be the same or different and are each a hydrogen atom or a straight-chain or branched aliphatic hydrocarbon group of 1 to 18 carbon atoms; R³ is a hydrocarbon group; R⁴ is a heteroatom or a group containing a heteroatom; r is 0 or 1; X is a polar group selected from an alcoholic hydroxyl group, a phenolic hydroxyl group, a carboxylic acid group, a carboxylic acid ester group, an acid anhydride group, an amino group, an amide group, an epoxy group and a mercapto group; p is an integer of 1 to 3; and when p is 2 or 3, each X may be the same or different, and in this case, if r is 0, X may be bonded to the same or different atom of R³, and if r is 1, X may be bonded to the same or different atom of R⁴.

WO 97/42236 discloses a process to produce functionalised polyolefins by copolymerising at least one polar monomer and at least one olefin under effective copolymerisation conditions using a catalyst system containing a transition metal complex and a cocatalyst. The at least one olefin can be the predominate monomer forming the functionalised polyolefin chain. The transition metal complex includes a transition metal having a reduced valency, which is selectable from groups 4-6 of the Periodic Table of the Elements, with a multidentate monoanionic ligand and with two monoanionic ligands. A polar monomer has at least one polar group and that group is reacted with or coordinated to a protecting compound prior to the copolymerisation step.

### Functionalised olefin monomer

The functionalised olefin monomer has the following structure and is a reaction product of a compound represented by the structure according to Formula (I) and a masking agent: 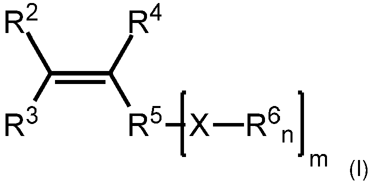
wherein R², R³, and R⁴ are each independently selected from the group consisting of H and hydrocarbyl with 1 to 16 carbon atoms,
wherein R⁵-[X-(R⁶)ₙ]ₘ is a polar functional group containing one or multiple heteroatom containing functionalities X-(R⁶)ₙ wherein
X is selected from -O-, -S- or -CO₂- and R⁶ is H, and n is 1, or
X is N and R⁶ is each independently selected from the group consisting of H and a hydrocarbyl group with 1 to 16 carbon atoms, and n is 2,
wherein R⁵ is either -C(R^{7a})(R^{7b})- or a plurality of -C(R^{7a})(R^{7b})- groups, wherein R^{7a}, and R^{7b} are each independently selected from the group consisting of H or hydrocarbyl with 1 to 16 carbon atoms and R⁵ comprises 1 to 10 carbon atoms,
wherein R³ and R⁵ may together form a ring structure that is functionalised with one or multiple X-(R⁶)ₙ,
where X is attached to either the main chain or side chain of R⁵, where m is an entire number between 1 and 10, preferably 1, 2 or 4.

Preferably, X is selected from -O- or -CO₂-, and R⁶ is H.

In a preferred embodiment, the functionalised olefin monomer according to Formula I is a hydroxyl- or carboxylic acid-bearing α-olefin or hydroxyl- or carboxylic acid-functionalised ring-strained cyclic olefin monomer, preferably a hydroxyl, a dihydroxyl or carboxylic acid α-olefin monomer.

Hydroxyl-bearing functionalised olefin monomers may correspond for example to Formula I wherein R², R³, and R⁴ are each H and wherein X is -O- and wherein R⁵ is either -C(R^{7a})(R^{7b})- or a plurality of -C(R^{7a})(R^{7b})- groups, wherein R^{7a}, and R^{7b} are each independently selected from the group consisting of H or hydrocarbyl with 1 to 16 carbon atoms. Examples of R⁵ groups are -(CH₂)₉- and -(CH₂)₂-.

Further examples of the hydroxyl-functionalised olefin monomer include, but are not limited to allyl alcohol, 3-buten-1-ol, 3-buten-2-ol, 3-buten-1,2-diol, 5-hexene-1-ol, 5-hexene-1,2-diol, 7-octen-1-ol, 7-octen-1,2-diol, 9-decen-1-ol and 10-undecene-1-ol.

Even further examples of functionalised olefin monomer include hydroxyl-functionalised ring-strained cyclic olefins (also called internal olefins), which may be for example typically hydroxyl-functionalised norbornenes, preferably 5-norbornene-2-methanol. They correspond to Formula I wherein R² and R⁴ are H and R³ and R⁵ together for a ring structure that is functionalised with X-H, wherein X is -O-.

Carboxylic acid-bearing functionalised olefin monomers may for example correspond to Formula I wherein R², R³, and R⁴ are each H and wherein X is -CO₂- and wherein R⁵ is either -C(R^{7a})(R^{7b})- or a plurality of -C(R^{7a})(R^{7b})- groups, wherein R^{7a}, and R^{7b} are each independently selected from the group consisting of H or hydrocarbyl with 1 to 16 carbon atoms. An example of an R⁵ group is -(CH₂)₈-. Preferred acid functionalised olefin monomers may be selected from the group of 4-pentenoic acid or 10-undecenoic acid.

Accordingly, it is preferred that the functionalised monomer is selected from the group consisting of allyl alcohol, 3-buten-1-ol, 3-buten-2-ol, 3-buten-1,2-diol, 5-hexene-1-ol, 5-hexene-1,2-diol, 7-octen-1-ol, 7-octen-1,2-diol, 9-decen-1-ol, 10-undecene-1-ol, 5-norbornene-2-methanol, 3-butenoic acid, 4-pentenoic acid or 10-undecenoic acid, preferably 3-buten-1-ol, , 5-hexen-1-ol, 10-undecen-1-ol, 4-pentenoic acid and 10-undecenoic acid.

The copolymerisation of ethylene with functionalised olefin monomers may lead to a certain degree of catalyst deactivation. It was found that the use of C3 to C6 olefins (instead of ethylene) as the olefin monomer unexpectedly resulted in a low degree of catalyst deactivation even when small functionalised olefin monomers are selected as the functionalised olefin monomer.

It was surprisingly found that the copolymer, comprising C3 to C6 olefins as the olefin monomer, could be prepared with a low degree of catalyst deactivation using small functionalised olefin monomers, such as allyl alcohol, 3-buten-1-ol, 3-buten-2-ol, 3-buten-1,2-diol, 5-hexen-1-ol.

### Masking agent

The hydrogen atoms directly bound to X in the functionalised olefin monomer has a Bronsted acidic nature poisonous to the highly reactive catalyst. A masking agent is used, which can react with the acidic hydrogen and binds to the monomer comprising the polar group. This reaction will prevent a reaction of the acidic polar group (-X-H) with the catalyst and coordination of the polar group (-X-) to the catalyst.

The molar amount of the masking agent preferably is at least the same molar amount as monomer of Formula (I) used in the process.

Preferably, the molar amount of masking agent is at least 10 mol% higher than the amount of functionalised monomer of Formula (I), or at last 20 mol% higher. Typically, the amount of masking agent is less than 500 mol% of monomer according to formula (I). In some occasions, higher amounts may be used or may be necessary.

Examples of masking agents are silyl halides, trialkyl aluminium complexes, dialkyl magnesium complexes, dialkyl zinc complexes or trialkyl boron complexes.

It is preferred that the masking agent is selected from trialkyl aluminium complexes, dialkyl magnesium complexes, dialkyl zinc complexes or trialkyl boron complexes. Preferred complexes are trialkyl aluminium complexes. Preferably, these trialkyl aluminium complexes have bulky substituents, like for example isobutyl groups. The most preferred masking agent is triisobutylaluminium.

The amount of monomeric moieties having a functional group ranges between 0.1 and 5 mol%, preferably between 0.11 and 2 mol%, as determined with ¹H NMR.

The amount of non-functionalised α-olefins other than ethylene in case the polymer is a PE based polymer or other than propylene when the polymer is a polypropylene based polymer is selected to achieve a functionalised copolymer with a crystallinity ranging between 0 - 35% as determined with DSC. Preferably, the melt temperature *(T*ₘ) (according to DSC) of a PE based sensor is below 100 °C. The *T*ₘ of a PP-based sensor is below 125 °C.

In some embodiments, the amount of non-functionalised α-olefins other than ethylene in case the polymer is a PE based polymer or other than propylene when the polymer is a polypropylene based polymer ranges between 0 and 15 mol%, preferably between 0.1 and 10, more preferably between 0.2 and 5 mol%, even more preferably between 0.3 and 3 mol% of the all when hexene is used.

In some embodiments, the density of the polyolefin which can be used in the smart packaging of the present invention is below 0.89 g/ml, preferably below 0.88 g/ml.

In some embodiments, the *M_{w}* of the polyolefin of the sensor may ranges from 5,000 - 500,000, preferably 50,000 - 200,000.

Preferably, the functional groups of the functionalised polyolefins are protic functional groups, preferably -OH or -COOH groups. The protic groups can also be partially or fully deprotonated to obtain a partially or fully polyolefinic ionomeric system, typically comprising metal or ammonium cations. According to the invention, the polyolefinic ionomer may comprise electrostatic interactions between multiple monoanionic polar functionalities at the polymer chain and mono- or multi-valent metal cations (like Na+ or Zn²⁺) or monocationic ammonium ions (like NH₄⁺) or polycationic ammonium ions (like H₃N⁺CH₂CH₂NH₃⁺). The electrostatic interactions within the polyolefinic ionomers can be tuned by selecting the proper type and/or amount of metal salts (monovalent versus multi-valent metal ions), ammonium salts or amines (monofunctional or polyfunctional ammonium salts or amines).

A polyolefinic ionomer according to the invention, may be so that it comprises multi-charge electrostatic interactions and comprises between 0.05 and 10 mol. equivalent, preferably between 0.2 and 8 mol. equivalent, further preferred between 0.4 and 5 mol. equivalent of a salt of a mono-valent metal salt or multi-valent metal salt, a monofunctional ammonium salt or polyfunctional ammonium salt or a monofunctional amine or polyfunctional amine with respect to the mol% of functionalised olefin monomers incorporated in the copolymer.

The sensor can contain hydrogen bond enhancing agents that are able to further stabilise the polar domains of the sensor containing the sensing compound. Hydrogen bond enhancing agents are agents that strengthen the intra-polymer hydrogen bonding interactions. According to the invention, such hydrogen bond enhancing agents are polyols, polyamines, polyacids, polyethers, polyesters, polycarbonates, polyamides, polyurethanes, polyureas, polysaccharides, polypeptides and combinations of at least two of said hydrogen bond enhancing agents. In that respect the term "poly" means a material having two or more functionalities that are capable of interacting with the functionalised polyolefin. Examples of such polyfunctional materials include ethylene glycol, glycerol, pentaerythritol, EVOH, EVA, mucic acid, galactaric acid, carbohydrates, ethylene diamine, diethylene triamine, tetramethyl ethylene diamine, pentamethyl diethylene triamine, polyethylenimine, maleic acid, succinic acid, tartaric acid, citric acid, polyacrylic acid, polyHEMA (polyhydroxyethylmethacrylate), poly(ethylene-co-acrylic acid), polyvinyl acetate, poly(ethylene-co-vinyl acetate), polyvinyl alcohol, poly(ethylene-co-vinyl alcohol), polyethylene oxide, polypropylene oxide, polyethylene oxide-co-propylene oxide), polyethylene carbonate), poly(propylene carbonate), polylactones, polymacrolactones, polyhydroxybutyrate (PHB), polycaprolactone, poly(ethylene brassylate), polylactide, polybutylene adipate, polybutylene adipate terephthalate, polyamide 6, polyamide 4,6, polyamide 6,6, polyvinylpyrrolidone, polyhydroxyethyl methacrylate, poly(2-aminoethyl methacrylate) Polytetrahydrofuran and combinations of at least two of the foregoing hydrogen bond enhancing agents. Preferred materials are those capable of forming hydrogen bonds with the functionalised polyolefin.

The amount of hydrogen bond enhancing agent is preferably from 0.01 to 10 wt.%, preferably from 0.03 to 7 wt.%, more preferably from 0.05 to 5 wt.%, based on the combined weight of the functionalised olefin copolymer and the hydrogen bond enhancing agent. The amount of hydrogen bond enhancing agent, possibly together with the type of hydrogen bond enhancing agent, can be used to tune the desired material properties.

The sensor can contain polar solvents, which can be used for dissolving the sensing compound.

Examples of polar solvents are: water, alcohols such as methanol, ethanol, propanol, butanol, ethylene glycol, glycerol, formic acid, acetic acid, DMSO, DMF, NMP, ethyl acetate, propylene carbonate. Combinations of these solvents can also be applied, for example a combination of water and an alcohol (like for example ethanol).

The amount of polar solvent ranges between 0 and 30 wt% relative to the weight of the sensor, preferably between 5 and 15 wt%.

Sensing compounds can be any compounds that are at least partly soluble in polar media and show a change upon change of the environment.

Examples of sensing compounds are pH indicators and/or redox indicators.

Examples of pH and/or redox indicators are methyl red, phenolophthalein, thymol blue, bromocresol purple, α-Naphtholbenzein, methylene blue, thionine, Indophenol, diphenylaminesulfonic acid, Indigo carmine, N,N-diphenylbenzidine.

Typical examples of substrates to be detected by the sensors are for example COₓ, O₂, NH₃, SO₂, HCl, Cl₂, Br₂ and NₓO_{y}; x = 1, 2; y = 1, 2;

The sensor can be prepared for example by dissolving the polymer containing functional groups in toluene and mix this with an aqueous or alcoholic solution of the sensing compound. Consequently, a certain amount of the water or alcohol (or any other polar solvent used to dissolve the sensing compound), but typically no more than 30 wt% relative to the weight of the sensor, will end up in the polar domain as well.

The sensor is made of a thermoplastic functionalised polyolefin, and can be made available in any form. Examples of sensors can be thin films, sheets, circles and the like.

The functionalised polyolefin matrix of the sensor typically has sufficient adhesive force to adhere to a wide variety of surfaces. If needed, an additional adhesive can be applied to help to adhere the sensor to a substrate. The thin films can be prepared by any known means, as long as the sensing compound is stable and the microstructure of the sensor having an apolar matrix and polar domains within said apolar matrix stays intact. Examples of preparation can be injection molding or compression molding, coextrusion, laminating of a thin sheet of sensor material to a substrate and the like.

The substrate can in principle be any suitable substrate, such as a microporous film, a non-porous film, a multilayer material and the like.

The sensor may contain more than one sensing compound.

The sensor can be used for measuring gases, pH of an environment, presence of oxygen and other gases, for example in food applications, like control of food quality, in medical applications.

The invention also relates to the use of the sensor in smart packaging and to smart packaging material containing the sensor.

### Figures

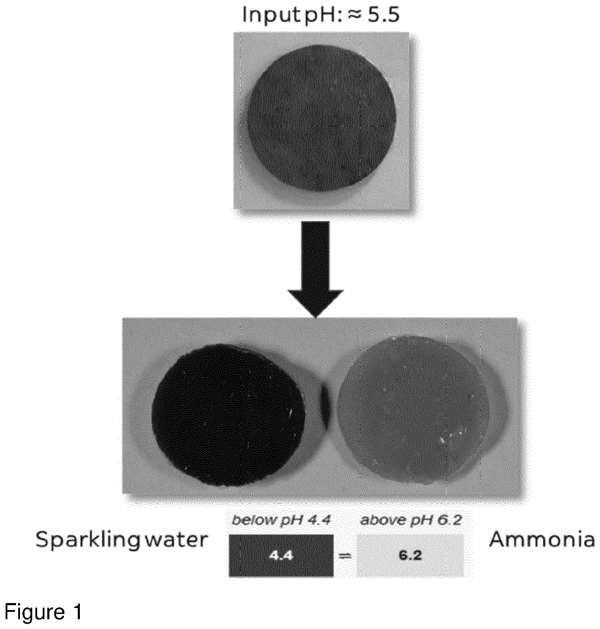

Figure 1 shows a sensor, based on a functionalised atactic polypropylene containing methyl red as the active sensing compound, as prepared and after being exposed to sparkling water and ammonia.

### Experimental Section.

General considerations. All manipulations were performed under an inert dry nitrogen atmosphere using either standard Schlenk or glove box techniques. Pentamethyl heptane (PMH) and heptane were employed as solvents for PP-based sensors and polymerisation experiments and were supplied by Brenntag Netherlands. 1-Hexene was purchased from Sigma Aldrich and was distilled over a sodium/potassium alloy with benzophenone as an indicator under inert atmosphere. Toluene, methanol, D-mannose, methylene blue, potassium hydroxide, methyl red were purchased from Sigma Aldrich, 10-undecene-1-ol, 10-undecenoic acid and 3-buten-1-ol were purchased from Sigma Aldrich and dried under an inert atmosphere using standard distillation techniques. Methylaluminoxane (MAO, 30 wt. % solution in toluene) was purchased from Chemtura. Diethyl zinc (DEZ, 1.0 M solution in toluene) and triisobutyl aluminium (TiBA, 1.0 M solution in hexanes) were purchased from Sigma Aldrich. (C₅Me₄(SiMe₂NtBu)TiCl₂) catalyst was prepared according to literature procedure described in Organometallics 1990, 9, 867-869 and Chem. Ber. 1990, 123, 1649-1651 and *rac*-Me₂Si(2-Me-4-Ph-Ind)₂ZrCl₂ was purchased from MCAT GmbH, Konstanz, Germany.

Synthesis of iPP-*co-*hexene-*co*-C₁₁OH (entry 3, Table 1). The polymerisation reaction was carried out in a 2 L stainless steel reactor. Prior to the polymerisation, the reactor was washed with 1.5 L heptane containing TiBA (1.0 M solution in toluene, 2 mL) at 150°C. Subsequently, heptane (1.5 L), TiBA (1.0 M solution in toluene, 2.0 mL), MAO (15 wt. % solution in toluene, 2.0 mL), TiBA protected 10-undecen-1-ol (20 mmol) and 1-hexene (160 mmol) were introduced into the reactor and stirred at 300 rpm at 50 °C. The reactor was vented off, the temperature was raised to 80 °C and the solvent was saturated with propylene (5 bar). In a glovebox, a stock solution of Me₂Si(2-Me-4-Ph-Ind)₂ZrCl₂ catalyst in toluene (5 mL) was prepared and the MAO activated catalyst solution (0.6 µmol) and DEZ (1.0 M solution in toluene, 0.5 mL) were transferred into the reactor using an overpressure of nitrogen. The propylene pressure was maintained constant during the polymerisation time (40 min). At the end of the polymerisation, the propylene feed was stopped and the residual propylene was vented off. The reaction mixture was quenched with acidified isopropanol (300 mL, 2.5 wt. % of acetic acid), filtered and washed with demineralised water. The resulting powder was dried in a vacuum oven under reduced pressure at 60 °C overnight.

A similar procedure was applied in propylene copolymerisation with 10-undecenoic acid (entry 10, Table 1) using Me₂Si(2-Me-4-Ph-Ind)₂ZrCl₂ and propylene copolymerisation with 3-buten-1-ol (entries 2-4, Table 2), 10-undecen-1-ol (entry 5, Table 2) and 10-unedecenoic acid (entry 6, Table 2) using [C₅Me₄SiMe₂NtBu]TiCl₂ catalysts (Table 2).

Preparation of PP-based pH sensor. PP-*co*-1-hexene-*co*-C₁₁OH (1 g, Table 1, entry 6) was dissolved in PMH (60 mL) containing Irganox 1010 (10 mg) at 90 °C for 1 h. Subsequently, to the polymer solution, 60 mL of demineralised water was added and the suspension was gently stirred. Than an alcohol/water (30/20 v/v) mixture, containing methyl red (5.0 mL, 0,0037 mmol), was introduced and stirred for 1 h at 90 °C and was subsequently allowed to cool to room temperature under stirring. The PP-*co*-1-hexene-*co*-C₁₁OH, containing methyl red was filtered, dried at 60 °C in the vacuum oven for 24 hours. All the sample plaques were prepared via compression-molding using PP ISO settings on LabEcon 600 high-temperature press (Fontijne Presses, the Netherlands). Then, the compression-molding cycle was applied: heating to 210 °C, stabilising for 5 min with no force applied, 5 min with 100 kN normal force and cooling down to 40 °C with 15 °C/min and 100 kN normal force. The above-described procedure was applied for all the materials listed in Tables 1-2. The OH and COOH functionalised samples revealing higher crystallinity level than 35% (entries 8-9, Table 1) and non-functionalised PP samples (entry 11, Table 1) did not reveal significant affinity to the sensing compound and no clear colour change could be observed when exposing these samples to acidic or basic conditions.

Preparation of PP-based oxygen sensor. PP-*co*-1-hexene-*co*-C₁₁OH (1 g, Table 1, entry 6) was dissolved in toluene (60 mL) containing Irganox 1010 (10 mg) at 100 °C for 1 h. The solution was stirred under reduced pressure to remove oxygen traces. Subsequently, to the polymer solution 20 mL of D-mannose (0.1 M aqueous solution) and methylene blue (0.1 g, 0.03 mmol) and KOH (0.1 M aqueous solution) were added to obtain a colourless solution. All the manipulations were carried out under nitrogen atmosphere. The mixture was stirred at 100 °C for 1 h and subsequently allowed to cool to room temperature under stirring. Afterwards, the polymer containing oxygen sensor was recovered by solvent evaporation under reduced pressure. Upon exposing the polymer to air, the colour of the material turned blue.

The OH and COOH functionalised samples revealing higher crystallinity level than 35% (entries 8-9, Table 1) and non-functionalised PP samples (entry 11, Table 1) did not reveal significant affinity to the sensing compound and no clear colour change could be observed when exposing these samples to air.

### Analytical techniques.

¹H NMR characterisation. The percentage of functionalisation was determined by ¹H NMR analysis carried out at 130 °C using deuterated tetrachloroethane (TCE-*d*₂) as the solvent and recorded in 5 mm tubes on a Varian Mercury spectrometer operating at a frequency of 400 MHz. Chemical shifts are reported in ppm versus tetramethylsilane and were determined by reference to the residual solvent protons.

High temperature size exclusion chromatography (HT-SEC). The molecular weights, reported in kg/mol, and the PDI were determined by means of high temperature size exclusion chromatography, which was performed at 150 °C in a GPC-IR instrument equipped with an IR4 detector and a carbonyl sensor (PolymerChar, Valencia, Spain). Column set: three Polymer Laboratories 13 µm PLgel Olexis, 300 × 7.5 mm. 1,2-Dichlorobenzene (o-DCB) was used as eluent at a flow rate of 1 mL.min-1. The molecular weights and the corresponding PDIs were calculated from HT SEC analysis with respect to narrow polystyrene standards (PSS, Mainz, Germany).

Differential scanning calorimetry (DSC). Thermal analysis was carried out on a DSC Q100 from TA Instruments at a heating rate of 5 °C.min⁻¹. First and second runs were recorded after cooling down to ca. -20 °C. The melting temperatures reported correspond to second runs.

The degree of crystallinity was derived from the DSC data by the comparison of the enthalpy of fusion measured at the melting point of the synthesized polymers and the enthalpy of fusion of a totally crystalline polymer measured at the equilibrium melting point (for more details for example see Polymer 2002, 43, 3873-3878).

The enthalpy of fusion of a totally crystalline polypropylene is reported to be 207.1 J/g, while the enthalpy of fusion of a totally crystalline polyethylene is 293.6 J/g.

**Table 1. Copolymerisations of propylene, 1-hexene and TiBA-pacified 10-undecen-1-ol and 10-undecenoic acid using isospecific catalyst.^{[a]}**

| # | C₁₁=OH^{[b]} (mmol) | C₁₀=COOH^{[b]} (mmol) | 1-hexene (mmol) | Yield (g)^{[c]} | *Mₙ* (kg/mol) (PDI) | C10=COOH or C11=OH (mol.%) ^{[d]} | *1*-hexene^{[d]} *(mol.%)* | *Tₘ*^{[e]} (°C) | x_{c}^{[e]} (%) |
|---|---|---|---|---|---|---|---|---|---|
| 1 | 5 | n.a. | 160 | 137.5 | 35.6 (2.1) | 0.16 | n.d. | 118.7 | 24.7 |
| 2 | 20 | n.a. | 80 | 36.0 | 56.9 (2.2) | 0.5 | n.d. | 123.3 | 30.2 |
| 3 | 20 | n.a. | 160 | 39.6 | 63.9 (2.2) | 0.6 | n.d. | 107.4 | 18.9 |
| 4 | 30 | n.a. | 160 | 35.4 | 73.2 (2.1) | 0.8 | 2.1 | 106.5 | 17.6 |
| 5 | 40 | n.a. | 160 | 73.5 | 58.9 (2.2) | 0.6 | 2.1 | 104.4 | 13.2 |
| 6 | 40 | n.a. | 40 | 50.6 | 55.3 (2.1) | 1.0 | 1.2 | 123.7 | 26.5 |
| 7 | 50 | n.a. | 160 | 72.5 | 53.0 (2.0) | 0.7 | 2.2 | 101.7 | 11.5 |
| 8 | 5 | n.a. | 16 | 24.7 | 40.0 (2.3) | 0.13 | 0.8 | 146.8 | 40.4 |
| 9 | 12 | n.a. | n.a. | 49.8 | 60.4 (2.1) | 0.4 | n.a. | 148.8 | 44.2 |
| 10 | n.a. | 30 | 160 | 72.2 | 67.3 (2.1) | 0.12 | 2.6 | 110.6 | 24.5 |
| 11 | n. a. | n.a. | n.a. | 59.1 | 45.2 (2.1) | n. a. | n. a. | 156.0 | 52.0 |

[a] Conditions: *rac*-Me₂Si(2-Me-4-Ph-Ind)₂ZrCl₂ = 0.6 µmol, heptane = 1.5 L, propylene = 5 bar, reaction temperature = 80 °C, reaction time = 40 min, MAO (15 wt% solution in toluene, 2 mL), DEZ (1.0 M solution in toluene) = 0.5 mL, TiBA (1.0 M solution in toluene) = 2 mL. [b] C₁₁=OH is 10-undecen-1-ol and was pacified using 1.0 equiv. of TiBA (1.0 M solution in toluene), C₁₀=COOH is 10-undecenoic acid and was pacified using 2.0 equiv. of TiBA (1.0 M solution in toluene) [c] The yield was obtained under non-optimised conditions and determined using the weight of polymer obtained after filtration and drying in vacuum oven overnight at 60 °C. [d] 10-undecen-1-ol or 10-undecenoic acid incorporation level as determined by ¹H NMR and 1-hexene incorporation was determined using 13C NMR. [e] Determined by DSC. X_{c} is determined by dividing the enthalpy of fusion of the polymer sample by 207.1 and multiplying by 100%.

**Table 2. Copolymerisations of propylene with TiBA-pacified 10-undecen-1-ol, 10-undecenoic acid and 3-buten-1-ol using non-isospecific catalyst.^{[a]}**

| # | C₄=OH^{[b]} (mmol) | C₁₁=OH^{[b]} (mmol) | C₁₀=COOH^{[b]} (mmol) | Yield^{[c]} | Com. incorp.^{[d]} (mol %) | *M*n (kg·mol⁻¹) | PDI |
|---|---|---|---|---|---|---|---|
| 1 | n.a. | n.a. | n.a. | 136 | n.a. | 57.2 | 2.7 |
| 2 | 5 | n.a. | n.a. | 55 | 0.11 | 44.6 | 2.2 |
| 3 | 10 | n.a. | n.a. | 41 | 0.33 | 59.6 | 2.6 |
| 4 | 15 | n.a. | n.a. | 46 | 0.38 | 62.3 | 2.3 |
| 5 | n.a. | 15 | n.a. | 33 | 0.23 | 77.2 | 2.4 |
| 6 | n.a. | n.a. | 5 | 28 | 0.10 | 41.7 | 2.3 |

[a] [C₅Me₄SiMe₂NtBu]TiCl₂ (2 µmol), heptane = 1.5 L, propylene = 5 bar, reaction temperature = 50 °C, reaction time = 40 min, MAO (15 wt % solution in toluene, 4 mL), TiBA (1.0 M solution in toluene, 2 mL). [b] C₄=OH and C₁₁=OH are 3-buten-1-ol and 10-undecen-1-ol, respectively and were pacified with 1.0 equiv. of TiBA (1.0 M solution in toluene), C₁₀=COOH is 10-undecenoic acid and was pacified using 2.0 equiv. of TiBA (1.0 M solution in toluene). [c] The yield was obtained under non-optimised conditions and determined using the weight of polymer obtained after filtration and drying in a vacuum oven overnight at 60 °C. [d] 3-buten-1-ol, 10-undecen-1-ol and 10-undecenoic acid incorporation levels as determined by ¹H NMR. Those samples were found amorphous as determined by DSC.

## Claims

1. Smart packaging containing a sensor comprising a randomly functionalised polyolefin having functional groups, a sensing compound selected from pH and/or redox indicators and optionally a polar solvent,
wherein the polyolefin has a crystallinity between 0 and 35 %, as determined with DSC, and
wherein the amount of monomeric moieties having a functional group ranges between 0.1 and 5 mol%, preferably between 0.11 and 2 mol%, as determined with ¹H NMR.

2. Smart packaging according to claim 1, wherein the polyolefin has functionalities chosen from hydroxyl (-OH), carboxylic acid (-COOH), amine and/or thiol functionalities, preferably the protic functional groups are -OH or -COOH groups.

3. Smart packaging according to any of the preceding claims, wherein the functionalised polyolefin is a functionalised low-density polyethylene, or a functionalised linear low-density polyethylene (LLDPE) or a functionalised very low density polyethylene (VLDPE), together defined as PE, or a functionalised ethylene-propylene rubber (EPR), a functionalised polypropylene (PP) of varying tacticity or a functionalised propylene - α-olefin copolymer.

4. Smart packaging according to any of the preceding claims, wherein the functionalised polyolefin also contains a comonomer 1-butene, 1-hexene, 1-octene, preferably between 0 and, depending of the nature of the comonomer a maximum of 15 mol% in order to reach the required crystallinity.

5. Smart packaging according to any of the preceding claims, wherein the density of the polyolefin used in the sensor of the present invention is below 0.89 g/ml, preferably below 0.88 g/ml.

6. Smart packaging according to any of the preceding claims, wherein the melt temperature (*T*ₘ) (according to DSC) of a functionalised PE based sensor is below 100 °C, or wherein the *T*ₘ of a functionalised PP based sensor is below 125 °C.

7. Smart packaging according to any of the preceding claims, wherein the functional groups of the functionalised polyolefins are protic functional groups, preferably -OH or -COOH groups, which protic groups can be partially or fully deprotonated to obtain a polyolefinic ionomeric system, typically comprising metal or ammonium cations.

8. Smart packaging according to any of the preceding claims, wherein the sensor comprises hydrogen bonding enhancing agents, which hydrogen enhancing agents are selected from polyols, polyamines, polyacids, polyethers, polyesters, polycarbonates, polyamides, polyurethanes, polyureas, polysaccharides, polypeptides and/or combinations of at least two of said hydrogen bond enhancing agents and wherein the amount of hydrogen bond enhancing agent is preferably from 0.01 to 10 wt.%, preferably from 0.03 to 7 wt.%, more preferably from 0.05 to 5 wt.%, based on the combined weight of the amorphous functionalised olefin copolymer and the hydrogen bond enhancing agent.

9. Smart packaging according to any of the preceding claims, wherein the sensor contains a polar solvent, and wherein the polar solvents are selected from water, alcohols such as methanol, ethanol, propanol, butanol, ethylene glycol and glycerol, formic acid, acetic acid, DMSO, DMF, NMP, ethyl acetate, propylene carbonate or combinations of these solvents and wherein the amount of polar solvent ranges between 0 and 50 wt% relative to the weight of the sensor, preferably between 5 and 25 wt%.

10. Smart packaging according to any of the preceding claims, wherein the sensing compounds are selected from methyl red, phenolophthalein, thymol blue, bromocresol purple, alpha-naphtholbenzein, methylene blue, thionine, Indophenol, diphenylaminesulfonic acid, Indigo carmine, N,N-diphenylbenzidine.

11. Smart packaging according to any of the preceding claims, wherein the sensor is a thin films, sheets, circles or wherein the sensor is attached to a substrate, wherein the substrate is a microporous film, a non-porous film, or a multilayer material.

12. Use of the smart packaging as defined in any one of claims 1-11 for food, pharmaceutical or medical applications.

## Patentansprüche

1. Intelligente Verpackung, die einen Sensor umfassend ein zufällig funktionalisiertes Polyolefin mit funktionellen Gruppen, eine Sensorverbindung, ausgewählt aus pH- und/oder Redoxindikatoren, und wahlweise ein polares Lösungsmittel enthält,
wobei das Polyolefin eine Kristallinität zwischen 0 und 35 % aufweist, bestimmt mit DSC, und
wobei die Menge an Monomereinheiten mit einer funktionellen Gruppe im Bereich zwischen 0,1 und 5 Mol-%, bevorzugt zwischen 0,11 und 2 Mol-%, liegt, bestimmt mit ¹H-NMR.

2. Intelligente Verpackung nach Anspruch 1, wobei das Polyolefin Funktionalitäten aufweist, die aus Hydroxyl- (-OH), Carbonsäure- (-COOH), Amin- und/oder Thiol-Funktionalitäten ausgewählt sind, wobei es sich bei den protischen funktionellen Gruppen bevorzugt um -OH- oder -COOH-Gruppen handelt.

3. Intelligente Verpackung nach einem der vorhergehenden Ansprüche, wobei es sich bei dem funktionalisierten Polyolefin um ein funktionalisiertes Polyethylen niedriger Dichte oder ein funktionalisiertes lineares Polyethylen niedriger Dichte (LLDPE) oder ein funktionalisiertes Polyethylen sehr niedriger Dichte (VLDPE), zusammen definiert als PE, oder um einen funktionalisierten Ethylen-Propylen-Kautschuk (EPR), ein funktionalisiertes Polypropylen (PP) mit unterschiedlicher Taktizität oder ein funktionalisiertes Propylen-α-Olefin-Copolymer handelt.

4. Intelligente Verpackung nach einem der vorhergehenden Ansprüche, wobei das funktionalisierte Polyolefin außerdem ein 1-Buten-, 1-Hexen-, 1-Octen-Comonomer, bevorzugt zwischen 0 und, abhängig von der Art des Comonomers, maximal 15 Mol-%, enthält, um die erforderliche Kristallinität zu erreichen.

5. Intelligente Verpackung nach einem der vorhergehenden Ansprüche, wobei die Dichte des in dem Sensor der vorliegenden Erfindung verwendeten Polyolefins unter 0,89 g/ml, bevorzugt unter 0,88 g/ml, liegt.

6. Intelligente Verpackung nach einem der vorhergehenden Ansprüche, wobei die Schmelztemperatur *(T*ₘ) (gemäß DSC) eines funktionalisierten PE-basierten Sensors unter 100 °C liegt, oder wobei die *T*ₘ eines funktionalisierten PP-basierten Sensors unter 125 °C liegt.

7. Intelligente Verpackung nach einem der vorhergehenden Ansprüche, wobei es sich bei den funktionellen Gruppen der funktionalisierten Polyolefine um protische funktionelle Gruppen, bevorzugt um -OH- oder -COOH-Gruppen, handelt, wobei die protischen Gruppen teilweise oder vollständig deprotoniert werden können, um ein polyolefinisches lonomersystem zu erhalten, das typischerweise Metall- oder Ammoniumkationen umfasst.

8. Intelligente Verpackung nach einem der vorhergehenden Ansprüche, wobei der Sensor wasserstoffbindungsverstärkende Mittel umfasst, wobei die wasserstoffverstärkenden Mittel aus Polyolen, Polyaminen, Polysäuren, Polyethern, Polyestern, Polycarbonaten, Polyamiden, Polyurethanen, Polyharnstoffen, Polysacchariden, Polypeptiden und/oder Kombinationen von mindestens zwei der wasserstoffbindungsverstärkenden Mittel ausgewählt sind und wobei die Menge des wasserstoffbindungsverstärkenden Mittels bevorzugt 0,01 bis 10 Gew.-%, bevorzugt 0,03 bis 7 Gew.-%, bevorzugter 0,05 bis 5 Gew.-%, beträgt, bezogen auf das kombinierte Gewicht des amorphen funktionalisierten Olefincopolymers und des wasserstoffbindungsverstärkenden Mittels.

9. Intelligente Verpackung nach einem der vorhergehenden Ansprüche, wobei der Sensor ein polares Lösungsmittel enthält und wobei die polaren Lösungsmittel ausgewählt sind aus Wasser, Alkoholen wie Methanol, Ethanol, Propanol, Butanol, Ethylenglykol und Glycerin, Ameisensäure, Essigsäure, DMSO, DMF, NMP, Ethylacetat, Propylencarbonat oder Kombinationen dieser Lösungsmittel und wobei die Menge des polaren Lösungsmittels im Bereich zwischen 0 und 50 Gew.-%, bezogen auf das Gewicht des Sensors, bevorzugt zwischen 5 und 25 Gew.-%, liegt.

10. Intelligente Verpackung nach einem der vorhergehenden Ansprüche, wobei die Sensorverbindungen aus Methylrot, Phenolophthalein, Thymolblau, Bromkresolpurpur, Alpha-Naphtholbenzein, Methylenblau, Thionin, Indophenol, Diphenylaminsulfonsäure, Indigokarmin und N,N-Diphenylbenzidin ausgewählt sind.

11. Intelligente Verpackung nach einem der vorhergehenden Ansprüche, wobei es sich bei dem Sensor um dünne Folien, Blätter, Kreise handelt oder wobei der Sensor an einem Substrat befestigt ist, wobei es sich bei dem Substrat um eine mikroporöse Folie, eine nicht poröse Folie oder ein mehrschichtiges Material handelt.

12. Verwendung der intelligenten Verpackung nach einem der Ansprüche 1 bis 11 für Lebensmittel, pharmazeutische oder medizinische Anwendungen.

## Revendications

1. Emballage intelligent contenant un capteur comprenant une polyoléfine fonctionnalisée de manière aléatoire présentant des groupes fonctionnels, un composé de détection choisi parmi des indicateurs de pH et/ou redox et éventuellement un solvant polaire,
dans lequel la polyoléfine présente une cristallinité comprise entre 0 et 35%, telle que déterminée par DSC, et
dans lequel la quantité de fractions monomères présentant un groupe fonctionnel est comprise entre 0,1 et 5% en moles, de préférence entre 0,11 et 2% en moles, telle que déterminée par RMN ¹H.

2. Emballage intelligent selon la revendication 1, dans lequel la polyoléfine présente des fonctionnalités choisies parmi les fonctionnalités hydroxyle (-OH), acide carboxylique (-COOH), amine et/ou thiol, de préférence les groupes fonctionnels protiques sont des groupes -OH ou -COOH.

3. Emballage intelligent selon l'une des revendications précédentes, dans lequel la polyoléfine fonctionnalisée est un polyéthylène à basse densité fonctionnalisé, ou un polyéthylène à basse densité linéaire (LLDPE) fonctionnalisé ou un polyéthylène à très basse densité (VLDPE) fonctionnalisé, ensemble définis comme PE, ou un caoutchouc éthylène-propylène (EPR) fonctionnalisé, un polypropylène (PP) fonctionnalisé de tacticité variable ou un copolymère propylène-α-oléfine fonctionnalisé.

4. Emballage intelligent selon l'une quelconque des revendications précédentes, dans lequel la polyoléfine fonctionnalisée contient également un comonomère 1-butène, 1-hexène, 1-octène, de préférence entre 0 et, selon la nature du comonomère au maximum 15% en moles afin d'atteindre la cristallinité requise.

5. Emballage intelligent selon l'une des revendications précédentes, dans lequel la densité de la polyoléfine utilisée dans le capteur de la présente invention est inférieure à 0,89 g/ml, de préférence inférieure à 0,88 g/ml.

6. Emballage intelligent selon l'une quelconque des revendications précédentes, dans lequel la température de fusion *(T*ₘ) (selon DSC) d'un capteur à base de PE fonctionnalisé est inférieure à 100°C, ou dans lequel la *T*ₘ d'un capteur à base de PP fonctionnalisé est inférieure à 125°C.

7. Emballage intelligent selon l'une des revendications précédentes, dans lequel les groupes fonctionnels des polyoléfines fonctionnalisées sont des groupes fonctionnels protiques, de préférence des groupes -OH ou -COOH, lesquels groupes protiques peuvent être partiellement ou totalement déprotonés pour obtenir un système ionomère polyoléfinique, comprenant typiquement des cations métalliques ou ammonium.

8. Emballage intelligent selon l'une des revendications précédentes, dans lequel le capteur comprend des agents améliorant la liaison hydrogène, lesquels agents améliorant la liaison hydrogène sont choisis parmi les polyols, les polyamines, les polyacides, les polyéthers, les polyesters, les polycarbonates, les polyamides, les polyuréthanes, les polyurées, les polysaccharides, les polypeptides et/ou des combinaisons d'au moins deux desdits agents améliorant la liaison hydrogène et dans lequel la quantité d'agent améliorant la liaison hydrogène est de préférence de 0,01 à 10% en poids, de préférence de 0,03 à 7% en poids, plus préférablement de 0,05 à 5% en poids, par rapport au poids combiné du copolymère d'oléfine fonctionnalisé amorphe et de l'agent améliorant la liaison hydrogène.

9. Emballage intelligent selon l'une des revendications précédentes, dans lequel le capteur contient un solvant polaire, et dans lequel les solvants polaires sont choisis parmi l'eau, les alcools tels que le méthanol, l'éthanol, le propanol, le butanol, l'éthylène glycol et le glycérol, l'acide formique, l'acide acétique, DMSO, DMF, NMP, l'acétate d'éthyle, le carbonate de propylène ou des combinaisons de ces solvants et dans lequel la quantité de solvant polaire est comprise entre 0 et 50% en poids par rapport au poids du capteur, de préférence entre 5 et 25% en poids.

10. Emballage intelligent selon l'une des revendications précédentes, dans lequel les composés de détection sont choisis parmi le rouge de méthyle, la phénolphtaléine, le bleu de thymol, le pourpre de bromocrésol, l'alpha-naphtolbenzéine, le bleu de méthylène, la thionine, l'indophénol, l'acide diphénylamine-sulfonique, le carmin d'indigo, le N,N-diphénylbenzidine.

11. Emballage intelligent selon l'une des revendications précédentes, dans lequel le capteur représente des films minces, des feuilles, des cercles ou dans lequel le capteur est fixé à un substrat, dans lequel le substrat est un film microporeux, un film non poreux ou un matériau multicouche.

12. Utilisation de l'emballage intelligent tel que défini dans l'une quelconque des revendications 1 à 11 pour des applications alimentaires, pharmaceutiques ou médicales.
